# EUROPÄISCHE PATENTANMELDUNG

(11) **EP 0 745 528 A2**
(43) Veröffentlichungstag der Anmeldung: **04.12.1996**
(21) Anmeldenummer: 96107865.6
(22) Anmeldetag: 17.05.1996
(51) Int. Cl.: B62D 21/18, B62D 65/00, E21B 15/00, E21B 7/02, E02F 9/08, E02D 7/16, B66C 23/00

(54) **Universal-Baugerät**

(30) Priorität: 01.06.1995 DE 19520129
(71) Anmelder: Klaus Obermann GmbH, 64395 Brensbach (DE)
(72) Erfinder: Obermann, Klaus, 64853 Otzberg (DE); Bube, Holger, 63927 Bürgstadt (DE); Kieslinger, Kurt, 90602 Pyrbaum (DE)
(74) Vertreter: Helber, Friedrich G., Dipl.-Ing.

(57) **Zusammenfassung**

Universal-Baugerät mit einem ein Fahrgestell tragenden Unterwagen und ein darauf aufgesetzten Oberwagen (10), welcher einen Antrieb (24), eine Steuerung (26, 28) und ein von dem Antrieb bewegbares Werkzeug trägt, die untereinander mittels entsprechender Kopplungsmittel gekoppelt sind.

Antrieb (24), Steuerung (26, 28), Kopplungsmittel und Werkzeug sind jeweils als aus vormontierten Modulen bestehende Einheiten ausgebildet, wobei die Module einzeln austauschbar am Oberwagen (10) befestigbar sind.

## Beschreibung

Die Erfindung betrifft ein Universal-Baugerät mit einem ein Fahrgestell tragenden Unterwagen und einem darauf aufgesetzten Oberwagen, welcher einen Antrieb, eine Steuerung und ein von dem Antrieb bewegbares Werkzeug trägt, die untereinander mittels entsprechender Kopplungsmittel gekoppelt sind.

Solche Universal-Baugeräte sind bekannt. Ein einzelnes solches Universal-Baugerät kann sowohl beim Tief- als auch beim Hochbau in Verbindung mit verschiedenen Werkzeugen, wie z.B. Bohrer und Rammen, mehrere Spezialbaugeräte kostengünstig ersetzen. Dabei sind die bekannten Universal-Baugeräte in herkömmlicher, integraler Weise aufgebaut, d.h. Antrieb, Steuerung usw. sind aus vielen Einzelteilen bestehend nacheinander erst am Oberwagen zusammengebaut und mit diesem so verbunden, daß die Verbindung nur unter Aufwand wieder gelöst werden kann. Bei diesen bekannten Universal-Baugeräten sind die am Oberwagen befestigten Teile dazu bestimmt, dort auf Dauer zu verbleiben. Dies hat den Nachteil, daß bei Ausfall einer einzigen funktionalen Gruppe, z.B. der Kühlung, das gesamte Universal-Gerät stillsteht und zeit- und kostenaufwendig repariert werden muß. Außerdem sind die in dieser Weise aufgebauten - quasi einstückigen - Universal-Baugeräte sehr schwer und in der Regel nur als Ganzes zu transportieren, was den Transport entsprechend aufwendig gestaltet. Entgegen ihrem Namen erlauben sie, wenn sie einmal mit einem Werkzeug bestückt sind, meist nur den Einsatz mit diesem Werkzeug, da vor Ort ein Umbau des Universal-Baugerätes schwierig oder sogar unmöglich ist. So ist es z.B. in der Regel mit vernünftigem Aufwand nicht möglich, vor Ort einen Universal-Bagger zu einem Universal-Bohrer umzubauen, welcher auch die Aufgaben eines Spezialbohrers, wie z.B. eines Vor-der-Wand-Bohrers übernehmen kann. Aber selbst wenn ein solcher Umbau erfolgen könnte, so ist doch die Universalität der bekannten Universal-Baugeräte durch die stets vorgegebene Leistung der verwendeten Motoren beschränkt, da die Motoren nicht ohne weiteres gegen Motoren anderer, niedrigerer oder höherer Leistung ausgetauscht werden können, sondern vielmehr zum Verbleib in dem jeweiligen Universal-Baugerät bestimmt sind.

Davon ausgehend, liegt der Erfindung die Aufgabe zugrunde, ein Universal-Baugerät anzugeben, welches zum einen zu Transportzwecken in leicht zu transportierende Einheiten zerlegbar ist, und bei welchem zum anderen ein Umbau, aber auch - im Bedarfsfalle z.B. zu Reparaturzwecken - ein Austausch der einzelnen funktionalen Gruppen vor Ort ohne Aufwand durchführbar ist. Dabei soll das Universal-Baugerät tatsächlich im Sinne seines Namens universal einsetzbar sein, d.h. es soll verschiedene Spezialwerkzeuge ersetzen können.

Die Aufgabe wird gelöst von einem Universal-Baugerät der eingangs genannten Art, bei welchem der Antrieb, die Steuerung, die Kopplungsmittel und das Werkzeug jeweils als aus vormontierten Modulen bestehende Einheiten ausgebildet sind, wobei die Module einzeln austauschbar am Oberwagen befestigbar sind.

Die Erfindung hat den Vorteil, daß auch Vorort ein Austausch der einzelnen Module erfolgen kann. Ein solches Universal-Baugerät kann kostengünstig transportiert und leicht vor Ort zusammengesetzt werden. Fällt ein Modul aus, so verursacht dies keinen langen - und damit teuren - Stillstand der Maschine, da es problemlos gegen ein Ersatzmodul ausgetauscht werden kann, so daß das Universal-Baugerät relativ schnell wieder einsetzbar ist, während das reparaturbedürftige Modul unabhängig davon repariert werden kann. Auch gestaltet sich bei einem derart ausgebildeten Universal-Baugerät die Umstellung des Gerätes von einem Werkzeug auf ein anderes sehr einfach. Benötigt das neue Werkzeug einen Antrieb höherer Leistung, so kann auch die den Antrieb bildende Einheit problemlos gegen eine stärkere Antriebseinheit ersetzt werden.

Bei einer bevorzugten Ausführungsform ist der Oberwagen als Stahlbauhauptträger ausgebildet. Dieser Stahlbauhauptträger kann zwei im wesentlichen parallele, durch Querverstrebungen beabstandete Trägerplatten aufweisen. Zweckmäßig sind dann an den Trägerplatten und/oder den Querverstrebungen eine Vielzahl von Befestigungsbohrungen und/oder Aufnahmen zum lösbaren Befestigen der einzelnen Module an dem Stahlbauhauptträger vorgesehen. Die Trägerplatten können im wesentlichen L-förmig sein, wobei dann bevorzugt die freien Enden der kurzen Schenkel der im wesentlichen L-förmigen Trägerplatten in Richtung auf den Unterwagen weisen. Die dann im wesentlichen horizontal verlaufenden langen Schenkel der L-förmigen Trägerplatten können sich zu ihren freien Enden hin verjüngen, und die kurzen Schenkel können breiter sein als die langen Schenkel. Alle diese Ausführungsformen erlauben einerseits eine besonders stabile und einfache, gleichzeitig kostengünstige Ausbildung des Oberwagens und gewährleisten andererseits die leichte Befestigbarkeit der einzelnen Module an dem Stahlbauhauptträger. Zusätzlich kann in diesen Stahlbauhauptträger ein Treibstofftank integriert werden. Dies ermöglicht eine besonders kompakte Bauweise des Universal-Baugerätes und stellt gleichzeitig sicher, daß der Treibstofftank gut vor Beschädigungen geschützt ist. Ferner kann der Stahlbauhauptträger an seinem Übergang zum Unterwagen einen Drehkranz besitzen, so daß der Oberwagen samt eines daran befestigten Werkzeuges in eine neue Position verschwenkt werden kann, ohne daß dazu der Unterwagen bewegt werden müßte.

Die Erfindung kann vorteilhaft dadurch weitergebildet werden, daß die den Antrieb bildende Einheit (Antriebseinheit) aus einem Energiequellenmodul und einem Hydraulikmodul besteht. Energiequellenmodul und Hydraulikmodul können in einem gemeinsamen Gehäuse angeordnet werden, wobei das Gehäuse dann vorzugsweise schalldämmende Wände besitzt. In diesem Fall kann dann zwischen Energiequellenmodul und Hydraulikmodul eine Schottwand angeordnet werden. In dem Energiequellenmodul kann ein Verbrennungsmotor vorgesehen sein. Alle diese Ausführungsformen erlauben im Bedarfsfalle eine besonders einfache Umstellung des Universal-Baugerätes auf einen Antrieb niedrigerer oder höherer Leistung.

In vorteilhafter Weiterbildung der Erfindung sind das Werkzeug und der Antrieb hydraulisch gekoppelt. Dabei kann der Fachmann je nach Art des verwendeten Werkzeuges wählen, ob das Hydraulikmodul mit dem Werkzeug ein offenes oder ein geschlossenes Hydrauliksystem bilden soll.

Als die das Werkzeug bildende Einheit (Werkzeugeinheit) kann eine Rammeinheit eingesetzt werden. Je nach Art der einzurammenden Materialien sowie nach Beschaffenheit des Untergrundes kann die Rammeinheit vorteilhaft einen Freifallbären, einen Dieselbären oder einen Vibrationsbären aufweisen. Neben der Rammeinheit sind vorteilhaft eine Vielzahl von Einheiten als Werkzeugeinheit einsetzbar, insbesondere eine Baggereinheit, eine Bohreinheit und eine Kraneinheit. Die Bohreinheit kann vorteilhaft eine Bohrlafette, ein Bohrgetriebe, eine Bohrstange und einen Bohrer aufweisen. Dabei wird in dieser Anmeldung unter dem Begriff "Bohrer" derjenige Teil einer Bohreinheit verstanden, der mit dem zu bohrenden Material in Kontakt tritt und dabei die Abtragung des Materials letztendlich bewirkt.

Besonders vorteilhaft kann das erfindungsgemäße Universal-Baugerät eingesetzt werden, wenn das Bohrgetriebe aus einem ersten Getriebe (Standardgetriebe) und einem zweiten Getriebe (Vorsatzgetriebe) sowie einem Getriebekasten besteht, wobei das Vorsatzgetriebe mit dem Standardgetriebe über den Getriebekasten verbunden ist und einen in Bohrrichtung gesehen kleineren Durchmesser als das Standardgetriebe besitzt. Dabei können das Vorsatzgetriebe, die Bohrstange und der Bohrer auf einer gemeinsamen Achse angeordnet werden. Dies ermöglicht den Einsatz des Universal-Baugerätes auch als sog. Vor-der-Wand-Bohrgerät. Ein solches Universal-Baugerät ermöglicht es, vertikale Bohrungen mit einem im Vergleich zum Durchmesser des Standardgetriebes sehr kleinen Durchmesser sehr nahe vor bestehenden Wänden zu bohren, was mit den bekannten Universal-Baugeräten aufgrund des großen Durchmessers des Standardbohrgetriebes nicht möglich ist.

Wenn relativ große Bohrrohre in den Boden eingebracht werden sollen, kann an das Standardgetriebe auch ein als Drehmomentverstärker ausgebildetes Vorsatzgetriebe angekoppelt werden, welches ohne eigenen Antrieb nur durch Herabsetzung der Drehzahl des Standardgetriebes das zum Bohren zur Verfügung stehende Drehmoment erhöht. Dadurch kann insbesondere dann, wenn ein solchermaßen erhöhtes Drehmoment nur gelegentlich bei einem Bauvorhaben gebraucht wird, auf teurere größere Bohrköpfe mit entsprechend stärkeren Antriebsmaschinen, welche bei dem Bauvorhaben ansonsten nicht ausgelastet wären, verzichtet werden.

Je nach Art des zu bohrenden Untergrundes erlaubt das erfindungsgemäße Universal-Baugerät vorteilhaft einen Hochdruck-Injektionsbohrer, einen SOB-Bohrer oder einen Kelly-Bohrer als Bohrer einzusetzen.

Bei einer bevorzugten Ausführungsform der Erfindung weist die die Steuerung bildende Einheit (Steuereinheit) ein Elektrosteuerkastenmodul, ein Kabinenmodul und ein Kühlmodul auf. Je nach Art und Ausgestaltung des Gesamtgerätes kann es sinnvoll sein, Elektrosteuerkastenmodul und Kühlmodul in einem gemeinsamen Gehäuse anzuordnen. In dem Elektrosteuerkastenmodul kann ein Zentralrechner integriert sein. Das Kühlmodul kann Anschlüsse zur Zuleitung von gasförmigem oder flüssigem Kühlmedium zu dem Elektrosteuerkastenmodul und/oder der Antriebseinheit aufweisen, so daß also gegebenenfalls mit nur einem Kühlmodul mehrere andere Module gekühlt werden können. Dabei kann das Kühlmodul hydraulisch betrieben werden.

Je nach Art des an dem Universal-Baugerät eingesetzten Werkzeuges kann es vorteilhaft sein, an dem Stahlbauhauptträger ein das Gewicht des Werkzeuges ausgleichendes Gegengewicht anzusetzen.

Bei einer weiteren bevorzugten Ausführungsform besitzt das Fahrgestell wenigstens eine angetriebene Achse, wobei diese Achse über entsprechende Kopplungsmittel mit dem Antrieb gekoppelt ist. Dies ermöglicht vorteilhaft, den Antrieb des Universal-Baugerätes sowohl zum Antreiben des Werkzeuges, als auch zum Fortbewegen des Universal-Baugerätes zu benutzen. Dabei können die angetriebene Achse und der Antrieb hydraulisch gekoppelt sein.

Weitere Einzelheiten und Vorteile der Erfindung ergeben sich aus der nachfolgenden Figurenbeschreibung in Verbindung mit den lediglich Ausführungsbeispiele zeigenden Zeichnungen. Dabei zeigt:
- Fig. 1: eine perspektivische Explosionszeichnung des Oberwagens und verschiedene Module eines erfindungsgemäßen Universal-Baugerätes;
- Fig. 2a-dein: mit verschiedenen Werkzeugeinheiten bestücktes Universal-Baugerät in Arbeits- und in Transportstellung;
- Fig. 3: ein mit einer Rammeinheit versehenes Universal-Baugerät, wobei die Rammeinheit einen Vibrationsbären aufweist;
- Fig. 4: ein mit einer Bohreinheit versehenes Universal-Baugerät, wobei der Bohrer der Bohreinheit ein Hochdruck-Injektions-Bohrer ist;
- Fig. 5: ein mit einer Bohreinheit versehenes Universal-Baugerät, bei welchem das Bohrgetriebe aus einem Standardgetriebe und einem mit diesem über einen Getriebekasten verbundenen Vorsatzgetriebe zum Vor-der-Wand-Bohren besteht;
- Fig. 6: ein Detail des erfindungsgemäßen Bohrgetriebes gemäß Fig. 5, und
- Fig. 7: ein weiteres aus einem Standardgetriebe und einem Vorsatzgetriebe bestehendes Bohrgetriebe, wobei das Vorsatzgetriebe als Drehmomentverstärker ausgebildet ist.

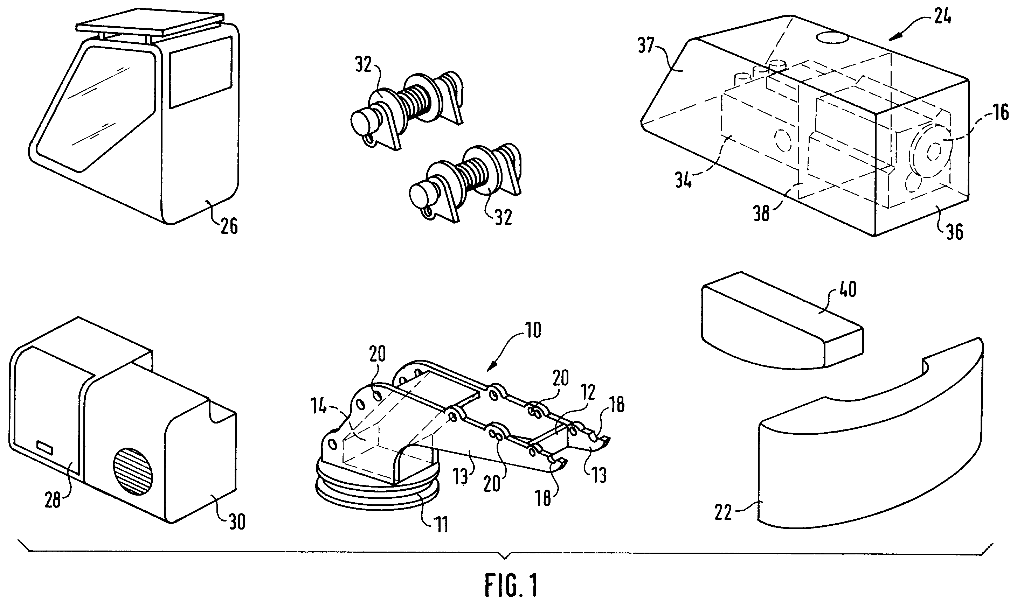

Die Fig. 1 zeigt einen als Stahlbauhauptträger 10 ausgebildeten Oberwagen eines erfindungsgemäßen Universal-Baugerätes, welcher einen Drehkranz 11 zur schwenkbaren Befestigung des Stahlbauhauptträgers 10 auf einem hier nicht gezeigten Unterwagen besitzt. Der Stahlbauhauptträger 10 weist zwei im wesentlichen parallele, durch Querverstrebungen 12 beabstandete, im wesentlichen L-förmige Trägerplatten 13 auf. In dem Stahlbauhauptträger 10 ist ein von den gestrichelten Linien angedeuteter Treibstofftank 14 zur Aufnahme von Treibstoff für den Verbrennungsmotor 16 integriert und mit hier nicht gezeigten Anschlußleitungen zum Anschließen des Treibstofftankes 14 an den Verbrennungsmotor 16 versehen. Der Stahlbauhauptträger 10 besitzt darüber hinaus eine Vielzahl von Aufnahmen 18 und Befestigungsbohrungen 20, von denen in der Zeichnung nur beispielhaft einige mit Bezugszeichen versehen wurden und die zur leichten Befestigung der einzelnen Module bzw. Einheiten an dem Stahlbauhauptträger 10 dienen. So ist z.B. in die Aufnahmen 18 bei Bedarf ein Gegengewicht 22 einhängbar, welches ein eventuell von einem sehr schweren Werkzeug auf den Stahlbauhauptträger und damit das Universal-Baugerät ausgeübtes, das Gerät in Richtung des Werkzeug kippendes Moment ausgleicht. An den beiden Längsseiten des Stahlbauhauptträgers 10 sind ferner die in ihrer Gesamtheit mit 24 bezeichnete Antriebseinheit sowie die aus Kabinenmodul 26, Elektrosteuerkastenmodul 28 und Kühlmodul 30 bestehende Steuereinheit befestigbar. Dabei besitzt das Kühlmodul hier nicht gezeigte Anschlüsse zum Zuleiten von flüssigem oder gasförmigem Kühlmedium zum Steuerkasten 28 einerseits und zum Verbrennungsmotor 16 andererseits. In dem Elektrosteuerkasten 28 ist ein Zentralrechner integriert, welcher über entsprechende Kopplungsmittel mit den in dem Kabinenmodul 26 vorgesehenen, üblichen Eingabemitteln in Verbindung steht und die Anweisungen einer Bedienperson in die zur Steuerung des gesamten Universal-Baugerätes nötigen Befehle umsetzt. Auf dem Stahlbauhauptträger 10 sind zwei Winden 32 als Teil einer hier nicht weiter gezeigten Werkzeugeinheit aufsetzbar.

Diese Winden werden hydraulisch betrieben und sind mit dem Hydraulikmodul 34 in an sich bekannter Weise gekoppelt. Energiequellenmodul 36 und Hydraulikmodul 34 sind in einem gemeinsamen Gehäuse 37 angeordnet. Dabei ist das den Verbrennungsmotor 16 aufweisende Energiequellenmodul 36 von dem Hydraulikmodul 34 durch eine Schottwand 38 getrennt. Diese Schottwand 38 ermöglicht zusammen mit den anderen, ebenfalls schalldämmenden, das Gehäuse 37 der Antriebseinheit 24 bildenden Wänden eine besonders gute Schallisolierung des Verbrennungsmotors 16. Die Antriebseinheit 24 ist an ihrem unteren Teil so ausgebildet, daß sie einen Hydrauliktank 40 aufnehmen kann.

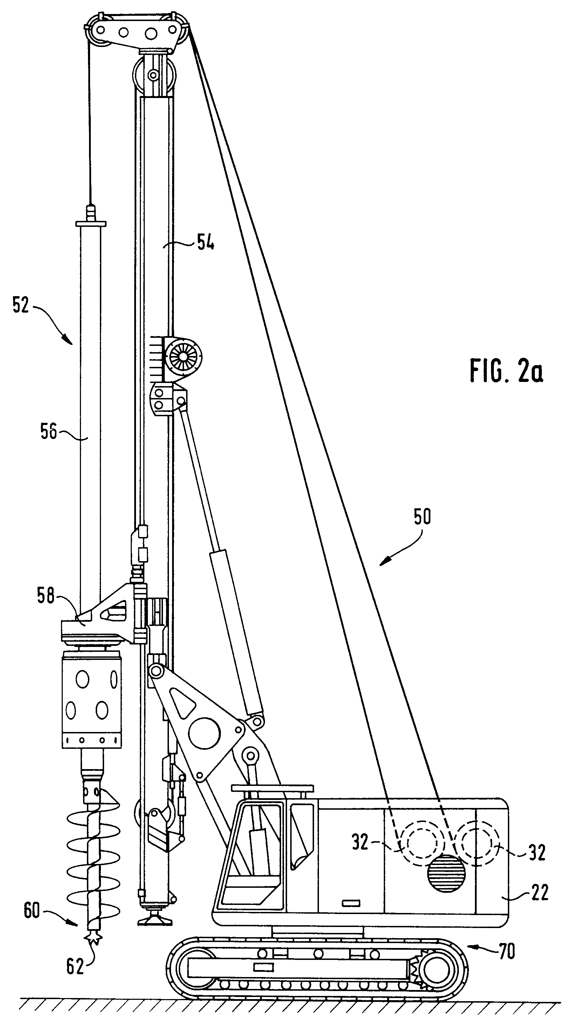

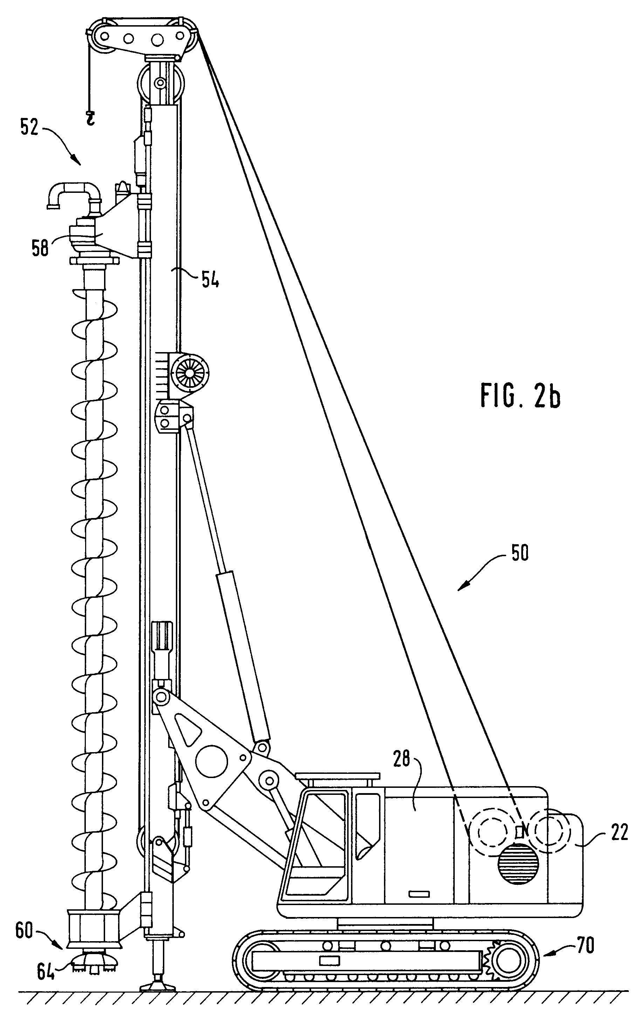

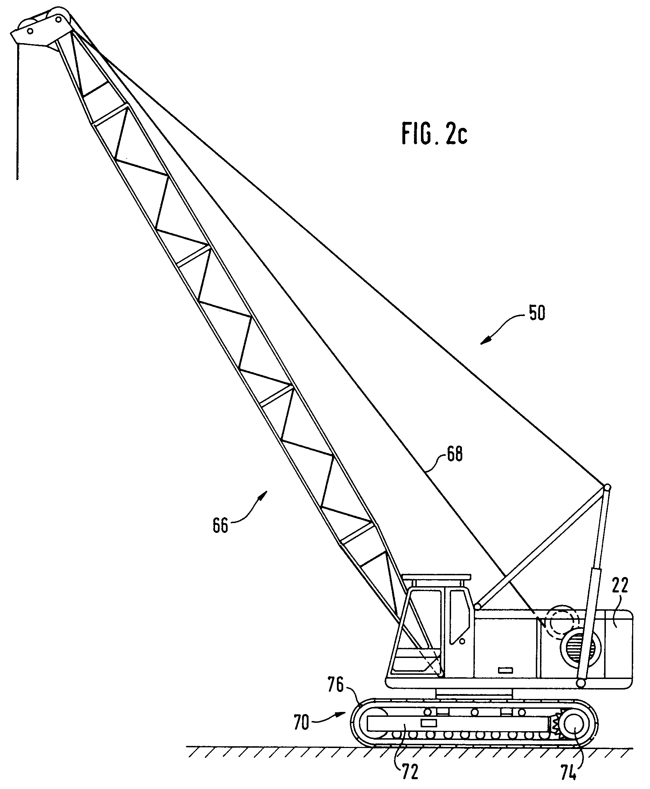

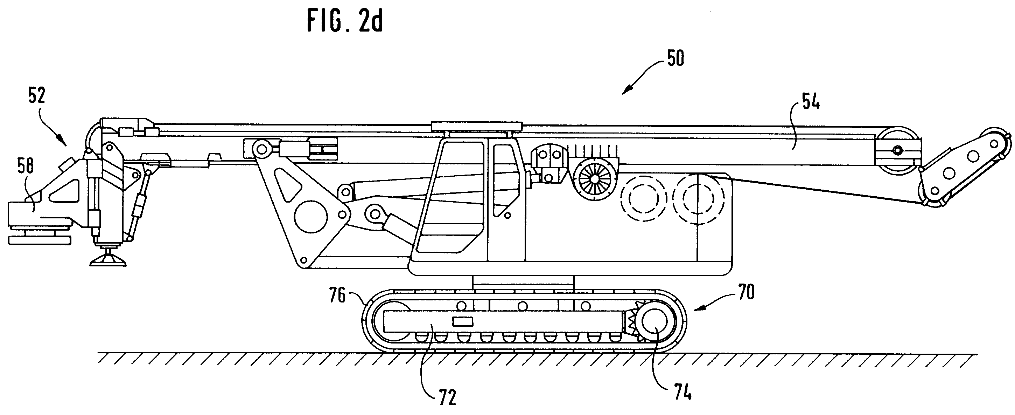

Die Figur 2 zeigt ein mit verschiedenen Werkzeugeinheiten bestücktes, in seiner Gesamtheit mit 50 bezeichnetes Universalbaugerät in Arbeits- und in Transportstellung. In den Figuren 2a und 2b ist als Werkzeugeinheit eine in ihrer Gesamtheit mit 52 bezeichnete Bohreinheit eingesetzt, welche eine Bohrlafette 54, eine Bohrstange 56, ein Bohrgetriebe 58 und einen Bohrer 60 aufweist. In der Figur 2a ist der Bohrer 60 als Kelly-Bohrer 62, in der Figur 2b als SOB-Bohrer 64 ausgebildet. In Figur 2c ist als Werkzeugeinheit eine Kraneinheit 66 eingesetzt. Dabei handelt es sich bei diesem Ausführungsbeispiel um eine Seilkraneinheit, wobei die Anschlußmittel, also z.B. ein Haken, zum Verbinden des mittels der Winden 32 bewegten Zugseiles 68 mit einer zu transportierenden Last nicht dargestellt sind. Es sei betont, daß anstelle eines Hakens natürlich auch Greifschaufeln o.dgl. an dem Zugseil 68 befestigt werden können, so daß das Universal-Baugerät 50 als Seilbagger einsetzbar ist. In der Figur 2d ist das mit einer Bohreinheit 52 bestückte Universal-Baugerät 50 in Transportstellung gezeigt, wobei die Bohrlafette 54 aus ihrer üblicherweise vertikalen Arbeitsstellung in eine horizontale Transportstellung verschwenkt wurde. Das Universal-Baugerät 50 kann nun auch z.B. unter Brücken und durch Tunnel niedriger Höhe problemlos hindurchfahren. Zum Verfahren des Universal-Baugerätes 50 ist an dem den Oberwagen tragenden Unterwagen 70 ein in seiner Gesamtheit mit 72 bezeichnetes Fahrgestell vorgesehen, welches eine angetriebene Achse 74 sowie zwei Gleisketten 76 besitzt. Die Achse 74 ist mit dem Antrieb hydraulisch gekoppelt. Bei allen hier gezeigten Ausführbeispielen ist am Heck des Oberwagens des Universal-Baugerätes 50 ein Gegengewicht 22 angebracht.

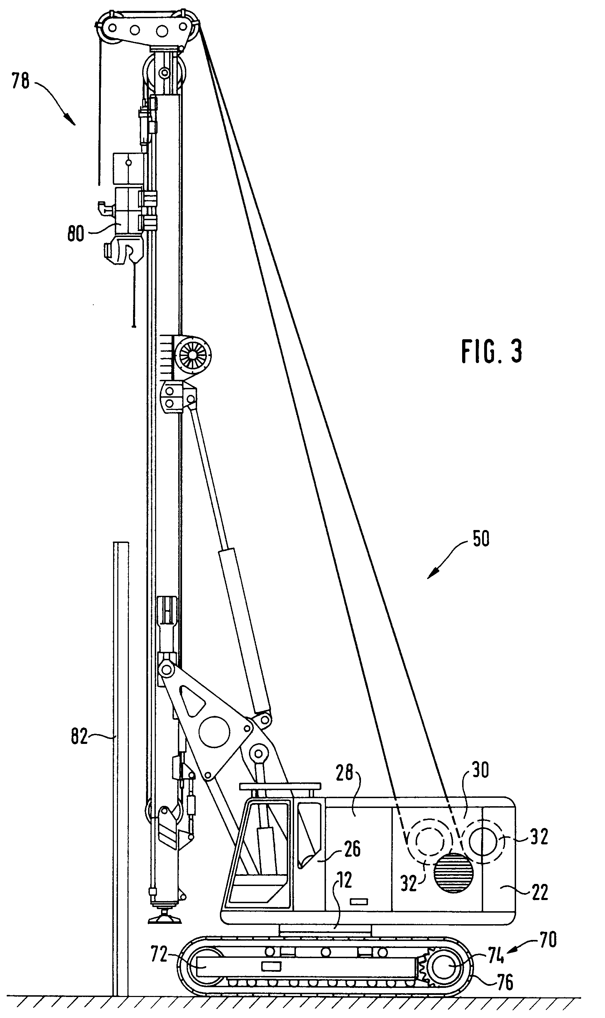

Die Figur 3 zeigt ein erfindungsgemäßes Universal-Baugerät 50, bei dem als Werkzeug eine in ihrer Gesamtheit mit 78 bezeichnete Rammeinheit eingesetzt ist. Diese Rammeinheit 78 weist einen Vibrationsbären 80 auf, der in üblicher Weise zum Einrammen z.B. einer Spundbohle 82 dienen kann. Das Universal-Baugerät 50 besteht darüber hinaus aus dem das Fahrgestell 72 tragenden Unterwagen 70 und dem mit dem Drehkranz 11 darauf aufgesetzten Oberwagen. Deutlich zu erkennen ist ein Teil der am Oberwagen befestigten Module, insbesondere das Kabinenmodul 26, das Elektrosteuerkastenmodul 28 sowie das Kühlmodul 30. Am Oberwagen ist zum Ausgleich des von der Rammeinheit 78 auf das Universal-Baugerät 50 ausgeübten Drehmomentes ein Gegengewicht 22 angeordnet. Es sei betont, daß anstelle des hier gezeigten Vibrationsbären 80 auch andere Bären verwendet werden können, also insbesondere Freifall- und Dieselbären.

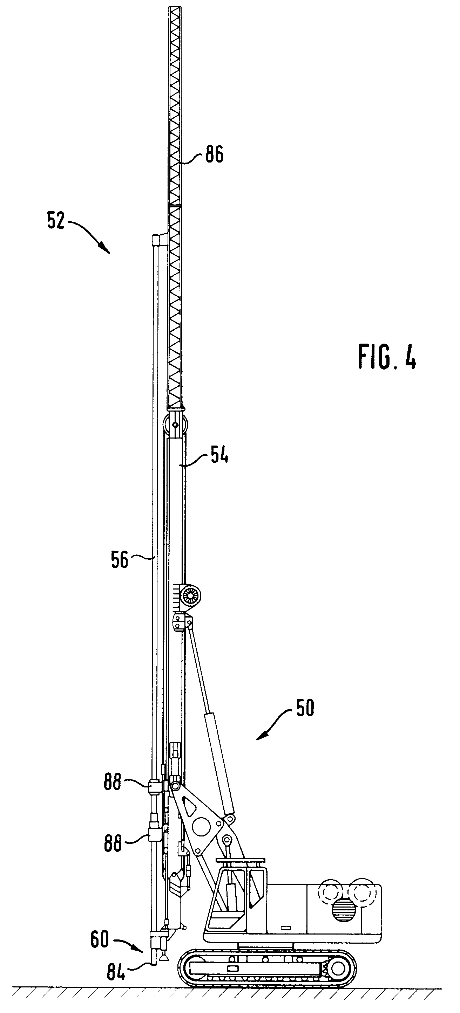

In der Figur 4 ist das erfindungsgemäße Universal-Baugerät 50 wiederum mit einer das Werkzeug bildenden Bohreinheit 52 ausgerüstet. Dabei ist der Bohrer 60 hierbei ein Hochdruck-Injektions-Bohrer 84. Bei dieser speziellen Anordnung wurde der üblicherweise am oberen Ende der Bohrlafette 54 vorgesehene Mäkler-Kopf entfernt und ein zweiteiliger Gittermast 86 angebaut. Die Bohreinheit 52 weist ferner zwei unabhängig voneinander längsverschieblich auf der Bohrlafette 54 angeordnete, synchron drehantreibbare und wahlweise in Mitnahmeverbindung mit der Bohrstange 56 bringbare, drehbar gelagerte und von der Bohrstange 56 durchsetzte Spannköpfe 88 auf, wie sie in der nicht vorveröffentlichten deutschen Patentanmeldung 195 11 076 näher beschrieben sind.

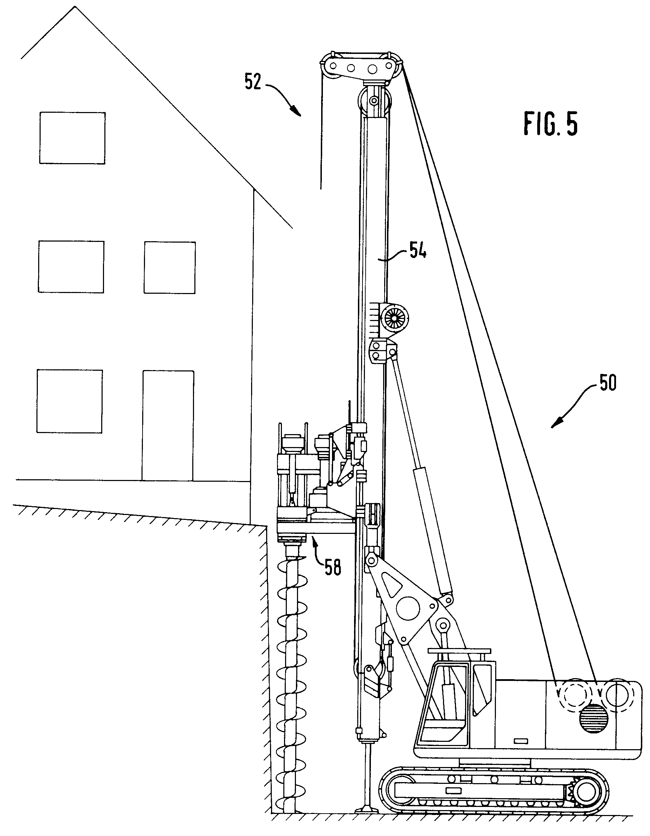

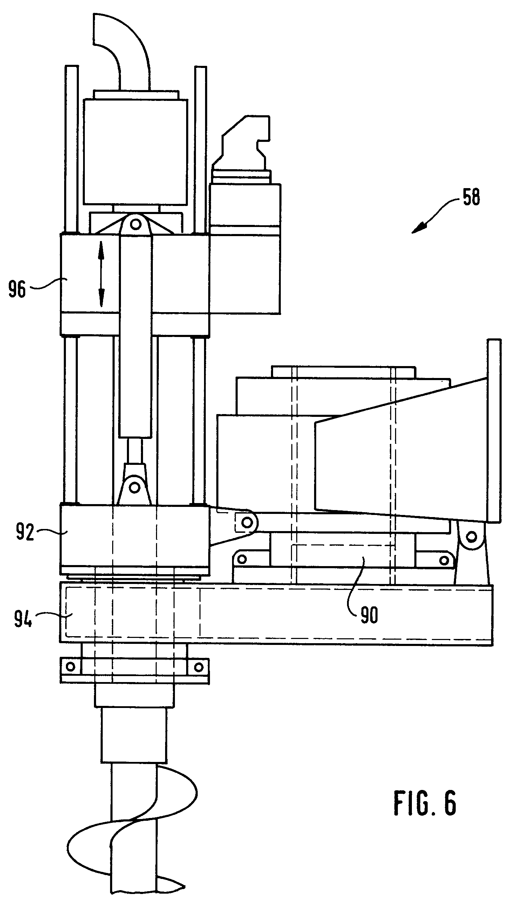

In den Figuren 5 und 6 ist das Universal-Baugerät 50 ebenfalls mit einer Bohreinheit 52 in der oben beschriebenen Weise (vgl. Fig. 2a, 2b und 4) ausgerüstet. Hierbei besteht das Bohrgetriebe 58 jedoch aus einem ersten, als Standardgetriebe bezeichneten Getriebe 90 und einem zweiten, als Vorsatzgetriebe bezeichneten Getriebe 92, welche über einen Getriebekasten 94 miteinander verbunden sind. Das Vorsatzgetriebe 52 weist einen in Bohrrichtung gesehen kleineren Durchmesser als das Standardgetriebe auf. Damit wird in der oben beschriebenen Weise ein besonders dichtes Vor-der-Wand-Bohren möglich. Vorsatzgetriebe 92, Bohrstange 56 und Bohrer sind auf einer gemeinsamen Achse angeordnet. Um ein kontinuierliches Bohren zu ermöglichen, ist bei diesem speziellen Ausführungsbeispiel ein weiteres Bohrgetriebe 96 vogesehen, zu dessen spezieller Funktionsweise auf die bereits zitierte, nicht vorveröffentlichte deutsche Patentanmeldung verwiesen wird.

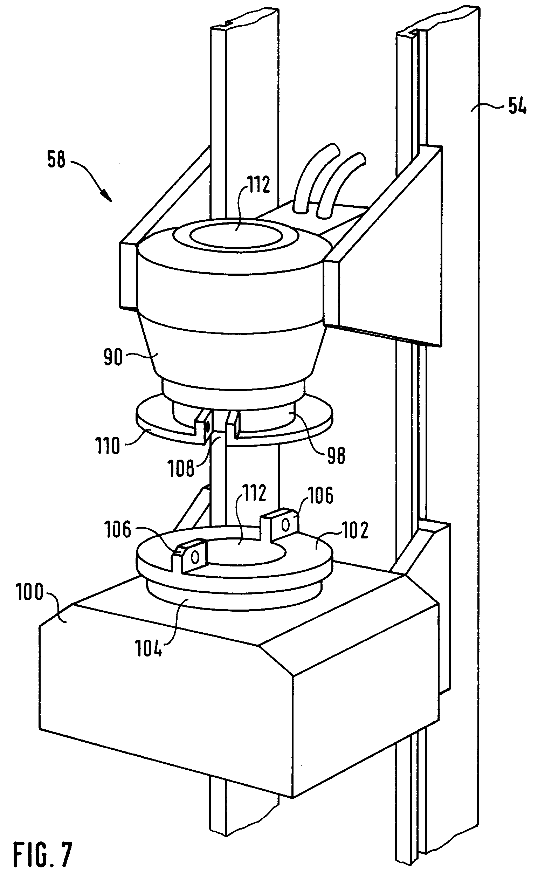

In der Fig. 7 ist ein weiteres zweiteiliges Bohrgetriebe 58 gezeigt, das aus dem eine Antriebswelle 98 besitzenden Standardgetriebe 90 und einem mit der Antriebswelle 98 koppelbaren Vorsatzgetriebe 100 besteht. Dabei ist das Vorsatzgetriebe 100 als Drehmomentverstärker ausgebildet, welcher das von der Antriebswelle 98 übertragene Drehmoment durch Herabsetzung der Drehzahl in an sich bekannter Weise verstärkt. Die Kopplung von Vorsatzgetriebe 100 und Antriebswelle 98 erfolgt dabei klauenkupplungartig, wozu an dem Flansch 102 der Kopplungswelle 104 des Vorsatzgetriebes 100 zwei Klauen 102 vorgesehen sind, die in entsprechende Ausnehmungen 108 des Flansches 110 der Antriebswelle 98 einsetzbar und dort z.B. mittels einer Schraube verriegelbar sind. Vorsatzgetriebe 100 und Standardgetriebe 90 sind beide an der nur ausschnittsweise gezeigten Bohrlafette 54 gehaltert und besitzen jeweils eine Durchgangsöffnung 112, durch welche eine nicht gezeigte Bohrschnecke, Bohrstange o.dgl. führbar ist.

Im Rahmen des Erfindungsgedankens sind zahlreiche Weiterbildungen möglich. So kann anstelle des gezeigten Gleisketten-Fahrgestells ebenso ein Fahrgestell mit Rädern verwendet werden. Die hydraulich mit dem Antrieb gekoppelten Winden können ebenso wie die angetriebene Achse auch mechanisch mit dem Antrieb gekoppelt werden, wobei jedoch die hydraulische Koppelung aufgrund einfacher Steckverbindungen besonders vorteilhaft handhabbar ist. Wird als Werkzeug eine Bohreinheit mit einem erfindungsgemäß ausgebildeten zweiteiligen Getriebe verwendet, so kann beim Vor-der-Wand-Bohren auch so vorgegangen werden, daß zunächst mit dem Standardgetriebe eine hohle Vollverdrängerschnecke mit großem Innendurchmesser mit dem Standardgetriebe in die Erde gebohrt und dort abgekoppelt wird, und dann in die hohle Vollverdrängerschnecke ein geeigneter Bohrer hineingestellt und an das Vorsatzgetriebe angeschlossen wird. Zur Stabilisierung des Universal-Baugerätes können am Fahrgestell hydraulisch oder mechanisch zwischen einer hochgezogenen oder -geschwenkten und einer abgesenkten oder -geschwenkten Abstützstellung verstellbare Stützfüße vorgesehen sein.

## Patentansprüche

1. Universal-Baugerät (50) mit einem ein Fahrgestell (72) tragenden Unterwagen (70) und einem darauf aufgesetzten Oberwagen (10), welcher einen Antrieb, eine Steuerung und ein von dem Antrieb bewegbares Werkzeug trägt, die untereinander mittels entsprechender Kopplungsmittel gekoppelt sind,
**dadurch gekennzeichnet,**
daß der Antrieb (24), die Steuerung (26, 28), die Kopplungsmittel und das Werkzeug (52, 66, 78) jeweils als aus vormontierten Modulen bestehende Einheiten ausgebildet sind und
daß die Module einzeln austauschbar am Oberwagen (10) befestigbar sind.

2. Universal-Baugerät nach Anspruch 1, dadurch gekennzeichnet, daß der Oberwagen als Stahlbauhauptträger (10) ausgebildet ist.

3. Universal-Baugerät nach Anspruch 2, dadurch gekennzeichnet, daß der Stahlbauhauptträger zwei im wesentlichen parallele, durch Querverstrebungen (12) beabstandete Trägerplatten (13) aufweist und daß an den Trägerplatten (13) und/oder den Querverstrebungen (12) eine Vielzahl von Befestigungsbohrungen (20) und/oder Aufnahmen (18) vorgesehen ist.

4. Universal-Baugerät nach einem der Ansprüche 2 bis 9, dadurch gekennzeichnet, daß der Stahlbauhauptträger (10) an seinem Übergang zum Unterwagen (70) einen Drehkranz (11) besitzt.

5. Universal-Baugerät nach einem der Ansprüche 1 bis 4, dadurch gekennzeichnet, daß die den Antrieb (24) bildende Einheit (Antriebseinheit) aus einem Energiequellenmodul (36) und einem Hydraulikmodul (34) besteht.

6. Universal-Baugerät nach Anspruch 5, dadurch gekennzeichnet, daß das Werkzeug (52, 66, 78) und der Antrieb (24) hydraulisch gekoppelt sind.

7. Universal-Baugerät nach einem der Ansprüche 1 bis 6, dadurch gekennzeichnet, daß als die das Werkzeug bildende Einheit (Werkzeugeinheit) eine Rammeinheit (78) einsetzbar ist.

8. Universal-Baugerät nach einem der Ansprüche 1 bis 7, dadurch gekennzeichnet, daß als Werkzeugeinheit eine Baggereinheit (66) einsetzbar ist.

9. Universal-Baugerät nach einem der Ansprüche 1 bis 8, dadurch gekennzeichnet, daß als Werkzeugeinheit eine Kraneinheit (66) einsetzbar ist.

10. Universal-Baugerät nach einem der Ansprüche 1 bis 9, dadurch gekennzeichnet, daß als Werkzeugeinheit eine Bohreinheit (52) einsetzbar ist.

11. Universal-Baugerät nach Anspruch 10, dadurch gekennzeichnet, daß die Bohreinheit (52) eine Bohrlafette (54), ein Bohrgetriebe (58), eine Bohrstange (56) und einen Bohrer (60) aufweist.

12. Universal-Baugerät nach Anspruch 11, dadurch gekennzeichnet, daß das Bohrgetriebe (58) aus einem ersten Getriebe (Standardgetriebe 90) und einem zweiten Getriebe (Vorsatzgetriebe 92) sowie einem Getriebekasten (94) besteht, wobei das Vorsatzgetriebe (92) mit dem Standardgetriebe (90) über den Getriebekasten (94) verbunden ist und einen in Bohrrichtung gesehen kleineren Durchmesser als das Standardgetriebe (90) besitzt.

13. Universal-Baugerät nach Anspruch 12, dadurch gekennzeichnet, daß das Vorsatzgetriebe (92), die Bohrstange (56) und der Bohrer (60) auf einer gemeinsamen Achse angeordnet sind.

14. Universal-Baugerät nach Anspruch 11, dadurch gekennzeichnet, daß das Bohrgetriebe (58) aus einem ersten Getriebe (Standardgetriebe 90) und einem zweiten Getriebe (Vorsatzgetriebe 100) besteht, wobei das Standardgetriebe (90) eine Antriebswelle (98) besitzt und wobei das Vorsatzgetriebe (100) als Drehmomentverstärker ausgebildet und mit der Antriebswelle (98) des Standardgetriebes (90) gekoppelt ist.

15. Universal-Baugerät nach Anspruch 14, dadurch gekennzeichnet, daß das Vorsatzgetriebe (100) mechanisch mit der Antriebswelle (98) des Standardgetriebes (90) gekoppelt ist.

16. Universal-Baugerät nach einem der Ansprüche 1 bis 15, dadurch gekennzeichnet, daß die die Steuerung bildende Einheit (Steuereinheit) ein Elektrosteuerkastenmodul (28), ein Kabinenmodul (26) und ein Kühlmodul (30) aufweist.

17. Universal-Baugerät nach Anspruch 16, dadurch gekennzeichnet, daß das Kühlmodul (30) Anschlüsse zur Zuleitung von gasförmigem oder flüssigem Kühlmedium zu dem Elektrosteuerkastenmodul (28) und/oder der Antriebseinheit (24) aufweist.

18. Universal-Baugerät nach einem der Ansprüche 1 bis 17, dadurch gekennzeichnet, daß das Fahrgestell (72) wenigstens eine angetriebene Achse (74) besitzt und daß der Antrieb (24) über entsprechende Kopplungsmittel mit dieser Achse (74) gekoppelt ist.
